# FASCICULE DE BREVET EUROPEEN

(11) **EP 3 030 774 B1**
(45) Date de publication et mention de la délivrance du brevet: **22.11.2017**
(21) Numéro de dépôt: 14759034.3
(22) Date de dépôt: 01.08.2014
(51) Int. Cl.: F02K 1/72, F02K 1/09, F02K 3/06, F02K 1/76

(54) **DISPOSITIF D'INVERSION DE POUSSÉE INTÉGRÉ ET NACELLE DE MOTEUR D'AÉRONEF AINSI ÉQUIPÉE**
INTEGRIERTE SCHUBUMKEHRVORRICHTUNG UND FLUGZEUGTRIEBWERKSGONDEL DAMIT
INTEGRATED THRUST REVERSER DEVICE AND AIRCRAFT ENGINE NACELLE EQUIPPED THEREWITH

(30) Priorité: 07.08.2013 FR 1357841
(43) Date de publication de la demande: 15.06.2016
(73) Titulaire: Safran Nacelles, 76700 Gonfreville-l'Orcher (FR)
(72) Inventeur: GUERIN, Philipe, F-76610 Le Havre (FR); KERBLER, Olivier, F-92160 Antony (FR); RAMI, Jean-Paul, F-76600 Le Havre (FR)
(74) Mandataire: Gaillarde, Frédéric F. Ch.
(86) Numéro de dépôt international: PCT/FR2014/052010
(87) Numéro de publication internationale: WO 2015/019007

(56) Documents cités:
- EP-A1- 1 801 007
- EP-A2- 0 779 429
- WO-A2-2011/018569
- FR-A1- 2 917 788
- FR-A1- 2 966 883
- FR-A1- 2 976 625
- US-A- 5 778 659
- US-A1- 2005 001 095

## Description

La présente invention concerne un dispositif d'inversion de poussée pour nacelle pour moteur d'aéronef. Elle concerne aussi une nacelle de moteur d'aéronef ainsi équipée.

Plus précisément, le dispositif d'inversion de poussée concerné est du type « à grilles », c'est-à-dire que l'inverseur de poussée comprend un capot, par exemple du type « O-duct », mobile alternativement entre une position déployée dans laquelle il ouvre un passage dans la nacelle et découvre les grilles de déviation du flux d'air secondaire, et une position d'escamotage dans laquelle il ferme ce passage. La réorientation du flux d'air secondaire traversant la veine annulaire est assurée par l'intermédiaire des grilles et de portes de blocage complémentaires, également appelées volets.

On connaît de l'état de la technique la demande EP 1 843 031 dans laquelle les grilles de déviation sont en fonctionnement normal rangées dans un volume défini à l'intérieur du capot mobile. Lors de sa translation, des volets de blocage sont alors entraînés dans la veine de circulation du flux d'air et, bloquant l'air, le retourne à travers les grilles de déviation vers l'avant de la nacelle par son extérieur. Notamment, des biellettes disposées dans le flux d'inversion de poussée viennent perturber l'écoulement, ce qui implique un risque de dégradation des grilles de déviation.

On connaît de l'art antérieur la demande de brevet FR 2 966 883 appartenant au demandeur et qui décrit un dispositif d'inversion de poussée à volets intégrés dans le capot mobile. Un inconvénient que peut présenter une telle solution est lié au risque d'effort irrégulier très important dans le mécanisme des volets et la déformation de la structure lorsque le capot mobile se déplace vers l'aval de la nacelle alors que les volets se trouvent encore en position escamotée, ces derniers se retrouvant brusquement au contact du flux d'air secondaire.

La présente invention vise notamment à pallier ces inconvénients, et se rapporte à cet effet à un dispositif d'inversion de poussée pour nacelle pour moteur d'aéronef selon la revendication 1 comprenant:
- un capot mobile alternativement entre une position déployée selon laquelle il ouvre un passage dans la nacelle, ladite position étant adaptée pour permettre un fonctionnement jet inversé de ladite nacelle, et une position d'escamotage selon laquelle il ferme ce passage, ladite position étant adaptée pour permettre un fonctionnement jet direct de la nacelle ;
- un ensemble de grilles de déviation d'un flux d'air secondaire s'écoulant dans une veine de circulation du flux d'air secondaire de la nacelle, fixées en amont dudit capot ;
- des volets de blocage du flux d'air secondaire mobiles alternativement entre :
   ∘ une position repliée dans laquelle lesdits volets sont stockés, au moins pour une position d'escamotage dudit capot à l'intérieur dudit capot et sous ledit ensemble de grilles de déviation, et
   ∘ une position déployée dans laquelle ils bloquent au moins partiellement le flux d'air secondaire s'écoulant dans ladite veine,
- des moyens pour exécuter le passage d'un fonctionnement jet direct à un fonctionnement jet inversé, adaptés pour réaliser le passage d'un fonctionnement jet direct à un fonctionnement jet inversé en deux temps :
   ∘ translation du capot mobile vers l'aval de la nacelle jusqu'à une position déployée dudit capot, lesdits volets étant en position repliée,
   ∘ ouverture des volets de blocage depuis ladite position repliée vers ladite position déployée,
ledit dispositif d'inversion de poussée étant caractérisé en ce que les volets de blocage comportent un bord amont monté sur une articulation solidaire dudit ensemble de grilles de déviation et un bord aval monté sur un levier articulé relativement audit ensemble de grilles de déviation.

Selon d'autres caractéristiques :
- les moyens pour exécuter le passage d'un fonctionnement jet direct à un fonctionnement jet inversé réalisé en deux temps comportent des vérins solidaires d'une section amont de la nacelle à travers un cadre avant de la nacelle pour mobiliser le capot mobile, un appui solidaire du capot mobile étant fixé à l'extrémité de la tige mobile de chacun des dits vérins de mobilisation de capot mobile, les ensembles de grilles de déviation étant solidaires du cadre avant ;
- le dispositif d'inversion de poussée comporte deux vérins de mobilisation de capot disposés de part et d'autre de la position « 12 H » et un vérin de mobilisation de capot disposé sensiblement à la position « 6 H » ;
- les moyens pour exécuter le passage d'un fonctionnement jet direct à un fonctionnement jet inversé réalisé en deux temps comportent des vérins solidaires des ensembles de grilles de déviation qui présentent chacun une vis sans fin sur laquelle une articulation solidaire du bord amont d'un volet est astreint à se déplacer pour manipuler le volet de blocage entre une position fermée sous l'ensemble de grilles de déviation et une position ouverte en travers de la veine de circulation du flux d'air secondaire de sorte que le flux d'air de soufflante soit dirigé à travers les ensembles de grilles de déviation ;
- le dispositif d'inversion de poussée comporte au moins un verrou entre le cadre avant et le capot mobile, adapté pour verrouiller ledit cadre avant et ledit capot mobile lors des opérations de maintenance, de sorte que l'ensemble composé du cadre avant, des ensembles de grilles de déviation, des volets de blocage et leurs vérins et du capot mobile peuvent être manoeuvrés au moyen d'au moins l'un des vérins de manipulation de capot mobile en maintenance ;
- les moyens pour exécuter le passage d'un fonctionnement jet direct à un fonctionnement jet inversé réalisé en deux temps comportent des vérins de manipulation de capot mobile et des vérins de mobilisation des volets de blocage intégrés en une pluralité de vérins combinés comportant une tige intérieure pour entraîner le capot mobile et un tube fileté extérieur pour entraîner une articulation du bord amont d'un volet de blocage ;
- le vérin combiné comporte un premier arbre moteur couplé à la tige intérieure par un mécanisme de conversion de mouvement, et au moins un second arbre moteur couplé au tube extérieur fileté par un mécanisme de conversion de mouvement ;
- le vérin combiné est solidaire du cadre avant associé au capot mobile ;
- le capot mobile comporte une bride disposée au-delà du volume occupé par les vérins, les ensembles de grilles de déviation, les volets de blocage et leurs leviers lorsque le capot mobile est refermé et en ce que la bride porte des appuis sur lesquels sont solidarisés les extrémités des tiges mobiles de vérin combiné pour mobiliser le capot mobile ;
- les volets de blocage présentant une forme trapézoïdale, la réduction de l'aéramatch est assurée par au moins l'un des moyens suivants :
- les intervalles entre bords latéraux des volets sont occupés par des inter-volets triangulaires mobiles qui sont progressivement retirés de, respectivement réintroduits dans, l'intervalle entre deux volets au fur et à mesure de la descente du volet dans la veine de circulation du flux d'air secondaire, respectivement le retour du volet sous l'ensemble de grilles de déviation ;
- les intervalles entre bords latéraux des volets sont occupés par des inter-volets triangulaires solidaires des ensembles de grilles de déviation, les bords latéraux des volets présentant des becquets en épaisseur pour dévier les jets interceptés et/ou
- les bords latéraux des volets adjacents présentent des profils d'épaisseur déterminés pour assurer le chevauchement des bords latéraux des volets lorsqu'ils sont déployés dans la veine de circulation du flux d'air secondaire.
Dans la présente demande, le terme « aéramatch » désigne le rapport entre la section de sortie de la tuyère en jet direct et la section de sortie de la tuyère en inversion de poussée.
L'invention concerne enfin une nacelle de moteur d'aéronef qui comporte un dispositif d'inversion de poussée selon l'invention.

L'invention sera mieux comprise et d'autres avantages indiqués à l'aide de la description et des dessins annexés parmi lesquels :
- La Figure 1 représente un diagramme d'états d'une séquence d'inversion de poussée utilisant les dispositions de l'invention ;
- La Figure 2 représente une demie vue en coupe schématique de la section aval d'une nacelle incorporant un dispositif d'inversion de poussée selon un mode de réalisation de l'invention dans un premier état ;
- La Figure 3 représente une demie vue en coupe schématique de la section aval de la Figure 2 dans un deuxième état ;
- La Figure 4 est une vue partielle de volets utilisés dans le dispositif d'inversion de poussée ;
- La Figure 5 représente une demie vue en coupe schématique de la section aval de la Figure 2 dans un troisième état ;
- La Figure 6 représente une demie vue en coupe schématique de la section aval de la Figure 2 dans un quatrième état ;
- La Figure 7 représente un diagramme de la course d'un volet lors du passage du troisième état au quatrième état ;
- Les Figures, 8, 9 et 9', 10 et 10' représentent diverses solutions pour améliorer le comportement aérodynamique du dispositif d'inversion dans les troisième et quatrième états ;
- La Figure 11 représente une demie vue en coupe schématique de la section aval de la Figure 2 lorsqu'elle est configurée lors d'une opération de maintenance ;
- Les Figures 12 à 14 représentent divers états d'un vérin combiné destiné à venir s'intégrer dans le dispositif d'inversion de poussée d'un second mode de réalisation ;
- La Figure 15 représente une demie vue en coupe schématique de la section aval d'une nacelle incorporant un dispositif d'inversion de poussée selon le second mode de réalisation de l'invention dans un premier état ;
- La Figure 16 représente une demie vue en coupe schématique de la section aval de la Figure 15 dans un deuxième état.

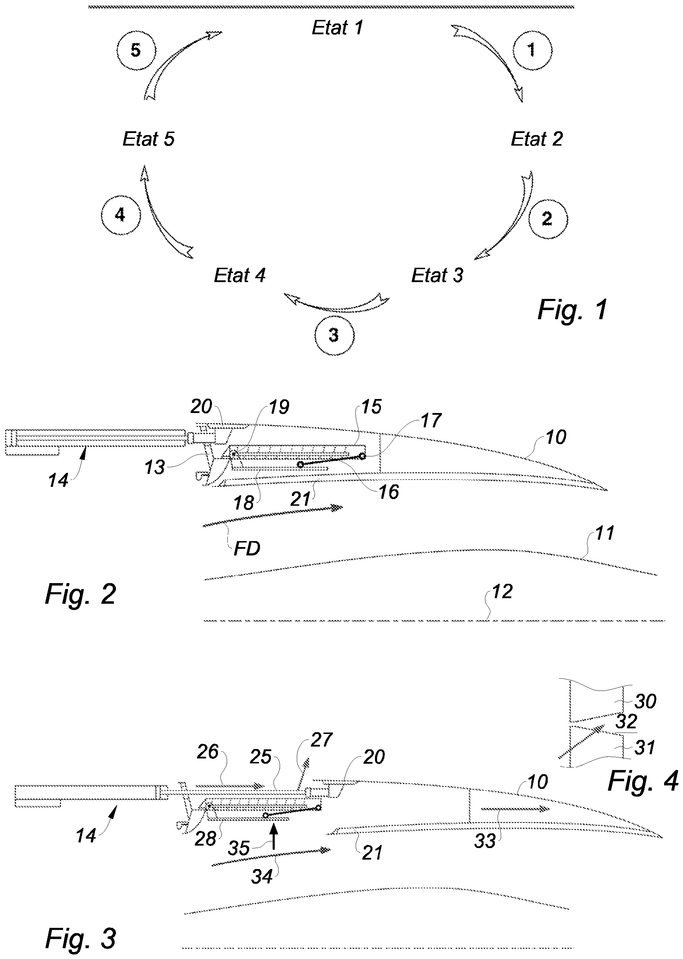

A la Figure 1, on a représenté une séquence détaillée de fonctionnement d'un dispositif d'inversion de poussée selon l'invention. Le dispositif d'inversion de poussée comporte des ensembles de grilles de déviation, des ensembles de volets de blocage du flux d'air secondaire et un capot mobile et divers vérins de mobilisation décrits plus loin dans la description.

Les ensembles de grilles de déviation sont solidaires du cadre avant, classique dans les nacelles et les volets de blocage sont associés aux ensembles de grilles de déviation, sous leur face intérieure relativement à l'axe central de la nacelle. Dans un premier état référencé 'Etat1' de la séquence de fonctionnement, les ensembles de grilles de déviation et les volets de blocage sont insérés à l'intérieur du capot mobile d'inversion de poussée. La configuration inactive du dispositif d'inversion de poussée produit un jet direct de la section d'entrée de la nacelle vers la section aval ou de sortie au-dessus de la structure interne fixe de la nacelle au niveau du moteur de l'aéronef. Grâce à l'activation de moyens d'actionnement tels que des vérins, le capot mobile est repoussé vers l'aval de la nacelle. A ce stade, le flux d'air secondaire ne s'échappe pas encore à travers les grilles de déviation.

Le premier changement d'état '1' conduit à l'état référencé 'Etat 2' dans lequel le capot mobile s'ouvre seul. Les ensembles de grilles de déviation et les ensembles de volets de blocage de jet sont alors découverts. Mais, le jet direct poursuit son trajet.

Le deuxième changement d'état '2' conduit à l'état référencé 'Etat 3' dans lequel les ensembles de volets de blocage de jet sont alors déployés. Le changement d'état '2' est obtenu grâce à l'activation de moyens d'actionnement comprenant un ensemble de vérins et de bielles dont les extrémités s'articulent sur trois points (un point de translation parallèle aux grilles, un point d'articulation sur les volets et un point d'articulation sur l'arrière du cadre). Il en résulte que, pendant le déploiement, le jet direct progressivement intercepté par les volets de blocage de jet cesse progressivement pour se convertir en jet inverse qui traverse les ensembles de grilles de déviation de sorte que, s'échappant par les ouvertures réparties sur la circonférence dégagée par le coulissement précédent du capot mobile, et conformé par les profils des grilles de déviation de jet, le jet inverse s'établit à l'extérieur de la nacelle, en s'écoulant en un jet annulaire autour de la section d'entrée de la nacelle et à l'extérieur de celle-ci.

L'état de déploiement des volets de blocage 'Etat 3' dure tant que l'inversion de poussée est commandée.

Lorsque l'annulation de l'inversion de poussée est commandée, le troisième changement d'état '3' conduit ensuite à l'état de fermeture des volets de blocage de jet qui retournent à leur position initiale, obturant les grilles de déviation bien que le capot mobile étant resté en position ouverte, le jet direct commence à s'établir et le jet inverse cesse progressivement. On parvient ainsi à l'état référencé 'Etat 4' dans lequel les volets de blocage de jet étant complètement repliés sous les ensembles de grilles de déviation, le jet inverse est interrompu et le jet direct reprend.

Le quatrième changement d'état '4 voit le début de la fermeture du capot mobile qui masque alors les ouvertures au-dessus des grilles de déviation pour atteindre finalement l'état dans lequel le capot mobile a repris la configuration de vol et le jet direct est établi.

On revient alors par le cinquième changement d'état '5' à l'état 1 dans lequel le dispositif d'inversion de poussée étant fermé, la nacelle est en position de vol avec le jet direct établi au-dessus de la structure interne fixe.

Selon l'invention, le dispositif d'inversion de poussée comporte des moyens pour exécuter le passage d'un fonctionnement jet direct à un fonctionnement jet inversé réalisé en deux temps. Ces moyens comportent notamment des calculateurs pour contrôler des moteurs électriques pour entraîner des vérins de mobilisation du capot mobile, puis des volets de blocage, seulement une fois que le capot mobile ait été déplacé en aval pour ouvrir la face radialement extérieure des ensembles de grilles de déviation. On suit la séquence de fonctionnement de la Figure 1, de l'état 'Etat 1' à l'état 'Etat 3'. La séquence inverse est ensuite commandée pour ramener les volets de blocage hors de la veine de circulation du flux d'air secondaire, sous les ensembles de grilles de déviation, puis le capot mobile pour recouvrir tant les vérins, les ensembles de grilles de déviation que les volets de blocage et leurs leviers, de sorte que ladite veine est libre d'interférences avec ces composants. On suit la séquence de fonctionnement de la Figure 1, de l'état 'Etat 31' à l'état 'Etat1'.

A la Figure 2, on a représenté une demie vue en coupe schématique de la section aval d'une nacelle incorporant un dispositif d'inversion de poussée selon un mode de réalisation de l'invention dans un premier état correspondant à l'état «Etat 1 » du diagramme de la Figure 1.

On a représenté l'axe central 12 de la nacelle qui est un axe de révolution le long duquel la poussée du moteur de l'aéronef est effectuée. On a représenté schématiquement une partie de la structure interne fixe (IFS) 11 à l'intérieur duquel est disposé le moteur proprement dit et en 10 le capot mobile qui constitue la section aval de la nacelle de l'invention. Le capot mobile comporte principalement une partie 10 qui sert de peau extérieure à la nacelle et qui se termine en amont (à gauche au dessin) au-delà des ensembles de grilles de déviation comme l'ensemble 15 de grilles de déviation disposé en position dite douze heures, « 12H », c'est-à-dire au niveau de la partie supérieure de la nacelle.

Au moins trois structures de capot mobile sont connues qui sont le capot annulaire en « O », et les capots hémicylindriques en « C » ou en « D » qui sont adaptées au capot mobile de la nacelle de l'invention.

L'extrémité à gauche de la peau extérieure 10 du capot mobile est solidaire d'un appui 20 sur lequel vient s'accrocher l'extrémité de la tige mobile d'au moins un vérin, ici disposé en position « 12H », qui porte le repère 14. Le ou les vérins comme le vérin 14 de mobilisation du capot mobile 10 sont solidaires de la section d'entrée disposée en amont (à gauche au dessin) et non représentée de la nacelle.

Dans un mode de réalisation, trois vérins de mobilisation tels le vérin 14 sont disposés de cette manière. Deux vérins sont disposés de part et d'autre de la position « 12H » ou partie supérieure de la nacelle, tandis que le troisième et dernier vérin, semblable lui aussi au vérin 14 est disposé en position dite six heures, « 6H », en partie inférieure de la nacelle, non visible à la Figure 2.

Les tiges mobiles des vérins viennent se solidariser d'appuis comme l'appui 20 à l'intérieur de la peau extérieure 10 du capot mobile. Le capot mobile présente un profil déterminé sur sa peau extérieure 10 qui se raccorde avec le profil du capot extérieur de la section amont non représentée et se termine à droite au dessin sur la partie d'éjection de la veine de circulation du flux d'air secondaire et du flux issu du moteur proprement dit à l'intérieur de la structure interne fixe IFS 11. Il comporte aussi une peau intérieure 21 qui se raccorde en aval à l'extrémité de la peau extérieure 10 de sorte que dans l'état représenté à la Figure 2, les ensembles de grilles de déviation comme l'ensemble de grille de déviation 15 et les ensembles de volets de blocage comme l'ensemble de volets de blocage 18, représentés à la Figure 2, se trouvent à l'intérieur du volume ménagé entre la peau externe 10 et la peau intérieure 21. La peau intérieure 21 présente une surface dirigée vers la structure interne fixe IFS 11 qui limite la veine de circulation du flux d'air secondaire FD avant son éjection au-delà de la nacelle à droite au dessin.

Le volume précité à l'intérieur des peaux intérieure et extérieure du capot mobile 10 est aussi limité par une partie annulaire, entourant l'axe de révolution 12, et qui est solidaire de la section amont, en pratique, solidaire du capot de soufflante disposée en amont (à gauche au dessin) de la section aval et dont est issue la veine de circulation du flux d'air secondaire FD. Cette partie annulaire dénommée cadre avant 13 est percée d'ouvertures permettant le passage des tiges mobiles des vérins de mobilisation du capot mobile 10, comme le vérin 14. Elle sert aussi de support aux ensembles de grilles de déviation comme l'ensemble de grilles de déviation 15 qui sont disposés régulièrement tout autour de l'axe de révolution 12, dans le volume ménagé à l'intérieur du capot mobile.

Ainsi qu'il est connu, les grilles de déviation sont des composants essentiels d'un dispositif d'inversion de poussée à grilles, en ce qu'ils coopèrent à l'inversion de trajet de la veine FD issue de la soufflante installée à l'intérieur de la section amont de la nacelle (non représentée). Selon une caractéristique importante de l'invention les grilles sont montées sur des supports qui sont solidarisés du cadre avant 13. De plus, les supports de grilles de chaque ensemble de grilles de déviation comme l'ensemble de grilles de déviation 15 portent un ensemble de volets de blocage de veine, comme le volet 18 articulé par un bord amont à un premier pivot ou articulation 19 et par un bord aval à au moins un levier comme le levier 16, lui-même articulé sur le support de l'ensemble de grilles de déviation 15. Il en résulte que le volet est dans l'état représenté à la Figure 2 replié sous l'ensemble de grilles de déviation à l'intérieur du volume intérieur compris dans le capot mobile 10 au-dessus de la peau intérieure 21 qui s'arrête au contact avec la section aval de la nacelle au droit du cadre avant 13.

A la Figure 3, on a représenté une demie vue en coupe schématique de la section aval de la Figure 2 dans un deuxième état de fonctionnement du dispositif d'inversion de poussée. Les vérins, comme le vérin 14 a alors repoussé le capot mobile 10, 21 vers la droite 33 du dessin (aval de la nacelle). A cette fin, la tige mobile 25 du vérin 14 s'est déplacée vers la droite 26 repoussant le capot mobile par son appui 20.

Cependant, le volet 18, comme pour tous les ensembles de volets de blocage associés aux ensembles de grilles de déviation comme l'ensemble 15 reste en position fermée sur la face inférieure de l'ensemble de grilles de déviation 15 auquel il est associé. Il en résulte que, bien que les bords amont des peaux intérieure 21 et extérieure 10 du capot mobile aient dégagés les orifices de l'inversion de poussée, la veine de circulation du flux d'air secondaire FD est encore majoritairement approvisionnée par la soufflante (non représentée).

Cependant, à cause de la structure des volets et des effets aérodynamiques introduits par l'ouverture du capot mobile 10, 21, une fraction de l'air 35 issue de la veine de circulation du flux d'air secondaire 34 (FD) est prélevée, traverse les volets par les bords latéraux entre volets comme le volet 18 et traverse 27 les ensembles de grilles de déviation comme l'ensemble de grilles 15.

En effet, pour permettre de former un obstacle en diaphragme annulaire sensiblement en travers de la veine, les divers volets de blocage comme le volet 18 doivent présenter une forme de trapèze de sorte que leur bord du côté amont de la nacelle quand ils sont encore fermés sur les ensembles de grilles de déviation est plus long que leur bord du côté aval, qui sera ultérieurement dirigé vers l'axe central 12 de la nacelle en travers de la veine d'air. Cette forme trapézoïdale provient de ce que, en position déployée dans la veine de circulation du flux d'air secondaire, la circonférence entourée par les bords aval des volets est plus petite que la circonférence entourée par les bords amont des volets restés plus loin de l'axe central 12 de la nacelle.

En se reportant à la Figure 4, on constate donc que l'intervalle 32 entre deux volets de blocage successifs 30 et 31, lorsqu'ils sont fermés sur l'ensemble de grilles de déviation auquel ils sont associés, est de forme triangulaire. Cet espace 32 laisse donc échapper une partie de la veine de circulation du flux d'air secondaire vers l'extérieur 27. On indiquera plus loin une solution aux problèmes posés par cette disposition particulière.

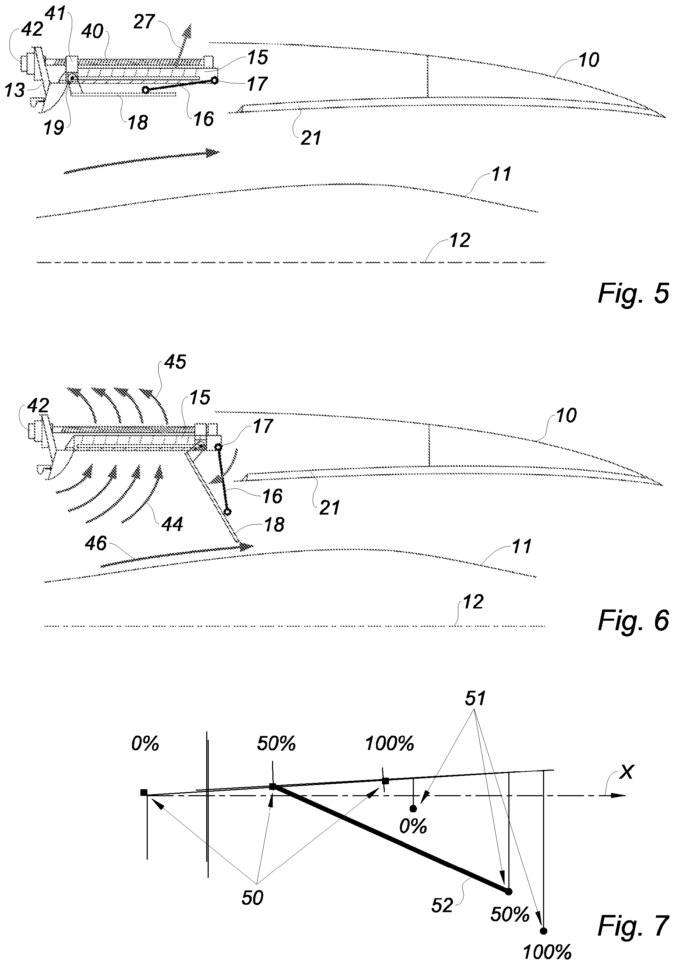

A la Figure 5, on a représenté une demie vue en coupe schématique de la section aval de la Figure 2 dans un troisième état de la séquence de fonctionnement décrite à la Figure 1.

Le capot mobile 10 étant ouvert, on a ajouté à la représentation de la Figure 4 un vérin de mobilisation des volets de blocage de jet direct. Le vérin de mobilisation 42 est solidaire du cadre avant 13 et comporte dans un exemple de réalisation une vis sans fin 40, sur laquelle peut se déplacer un écrou 41, bloqué en rotation ainsi qu'il est connu. L'écrou 41 porte l'articulation 19 du bord amont du volet 18 disposé fermé sous l'ensemble de grilles de déviation 15. L'articulation 19 comporte un arbre qui pénètre dans une glissière 28 solidaire du support de l'ensemble de grilles de déviation 15 vers l'aval de la nacelle. Lorsque le vérin 42 est mis en rotation, la vis sans fin 40 se met à tourner entraînant l'écrou 41. Le bord amont du volet 18 sera alors entraîné vers l'aval astreint à rester le long de la glissière 28, sensiblement parallèle à l'axe central 12 de la nacelle.

A la Figure 6, on a représenté une demie vue en coupe schématique de la section aval de la Figure 2 lors du passage du troisième état au quatrième état dans la séquence décrite à la Figure 1.

L'écrou 41 a été entraîné entièrement à droite (aval) de la Figure de sorte que le volet de blocage 18 a pivoté et s'est déplacé de façon à intercepter la veine 46. La plus grand partie du flux d'air issu de la soufflante en aval (non représenté) est alors dévié par les volets de blocage comme le volet 18, disposés en diaphragme annulaire autour de l'axe de révolution de la nacelle 12 dans un flux 44 qui traverse alors par leur fond dirigé vers l'axe de révolution 12, les ensembles de grilles de déviation comme l'ensemble de grilles 15. Il en résulte un flux émis en dehors de l'ouverture offerte par le coulissement à droite du capot mobile 10 d'un flux inversé 45.

La Figure 7 représente un diagramme de la course d'un volet lors du passage du troisième état au quatrième état. Dans un mode de réalisation, la coulisse (28 ; Figure 6) qui sert à guider le bord amont de chaque volet est inclinée selon la direction 50 relativement à la direction X de l'axe de révolution (12, Figure 6) de la nacelle d'un angle négatif entre l'axe X, parallèle à l'axe central 12 de la nacelle, et l'axe de la coulisse 28, en ce sens que le bord amont du volet astreint à rester sur la coulisse s'éloigne de l'axe central lors de son déplacement vers l'aval de la nacelle. A cause du levier (16, Figure 6) le volet de blocage suit une course en passant par la position 52 jusqu'à ce que son extrémité aval atteigne la position « 100% » d'ouverture du volet de blocage de la veine de circulation du flux d'air secondaire.

Les Figures, 8, 9 et 9', 10 et 10' représentent diverses solutions pour améliorer le comportement aérodynamique du dispositif d'inversion dans les troisième et quatrième états.

Les dispositions des Figures précitées sont destinées à réduire le risque d'augmenter l'aéramatch qu'on a décrit notamment à l'aide de la Figure 4. On indique seulement que deux effets aérodynamiques doivent être contrôlés. Le premier apparaît pendant le déplacement du capot mobile qui découvre les volets de blocage sous les ensembles de grilles de déviation. Il a été décrit à l'aide de la figure 4 et il conduit à produire des efforts sur les grilles par les passages d'air entre volets. Le second effet aérodynamique a lieu pendant la descente du bord aval des volets dans la veine principale que les volets sont destinés à bloquer pour la dévier à travers les ensembles de grilles de déviation. Dans ce second effet, les aubes de la soufflante reçoivent une turbulence produite par l'interruption progressive de la veine de circulation du flux d'air secondaire, lorsque les espaces triangulaires entre volets se réduisent au fur et à mesure que les volets se rejoignent. On a prévu les dispositions suivantes pour réduire les effets adverses.

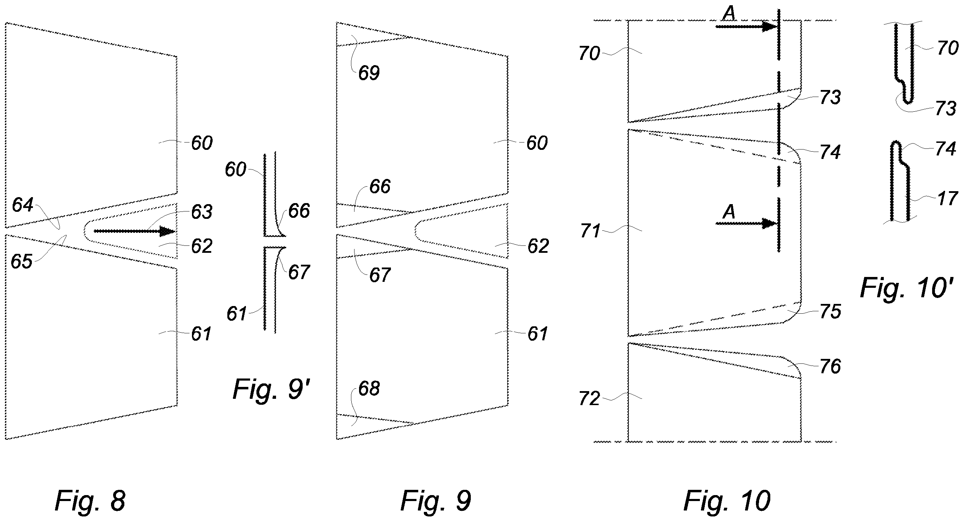

Dans la solution de la Figure 8, on dispose, par exemple en relation avec le levier 17 de mobilisation du bord aval de chaque volet de blocage comme le volet 18 (Figure 3) un inter-volet mobile de forme triangulaire disposé entre deux volets 60 et 61. Lorsque le vérin 42 (Figure 3) commence à entraîner le volet 17 vers sa position ouverte dans la veine de circulation du flux d'air secondaire, l'inter-volet 62 suit un mouvement de retrait 63 qui lui permet de dégager l'espace sous l'ensemble de grilles de déviation 15 auquel le volet 18 est associé. De cette manière, les intervalles entre bords latéraux des volets sont occupés par des inter-volets triangulaires mobiles qui sont progressivement retirés de, respectivement réintroduits dans, l'intervalle entre deux volets au fur et à mesure de la descente du volet dans la veine, respectivement le retour du volet sous l'ensemble de grilles de déviation.

Aux Figures 9 et 9', on a représenté une solution dans laquelle les inter-volets comme l'inter-volet 62 placé entre les volets consécutifs 60 et 61 sont fixes. Pour augmenter la pression de passage d'air en inversion de poussée, on a alors disposé des béquets 66-69 sur les coins amont des volets 60 et 61 de sorte que la quantité d'air capturé dans le trajet interrompu de la veine par les volets de blocage en position ouverte soit augmentée pour contre-balancer l'obstruction présentée par les inter-volets fixes 62. A la Figure 9', on a représenté une coupe partielle de l'épaisseur des coins amont des volets. Chaque excroissance est composée d'une surépaisseur progressive, qui est maximale sur le bord latéral du volet. Il en résulte que les intervalles entre bords latéraux des volets sont occupés par des inter-volets triangulaires solidaires des ensembles de grilles de déviation, les bords latéraux des volets présentant des becquets en épaisseur pour dévier les jets interceptés.

Aux Figures 10 et 10', on a représenté une solution qui permet de faire se chevaucher les bords latéraux 73 et 74 des volets adjacents 70-72. A cette fin, l'extrados et l'intrados de deux bords successifs sont affinés de sorte que lorsque les volets sont ouverts, les bords latéraux, vers l'aval des volets se recouvrent progressivement de l'amont vers l'aval lorsque les volets descendent progressivement de la position fermée à la position ouverte lorsque chaque volet de blocage est disposé dans la veine. La Figure 10' est une coupe partielle schématique selon la ligne A-A de la Figure 10. La ligne extrême de recouvrement est calculée sur chaque bord de volet pour que les volets s'imbriquent les uns dans les autres lorsqu'ils sont ouverts. Les bords latéraux des volets adjacents présentent ainsi des profils d'épaisseur déterminés pour assurer le chevauchement des bords latéraux des volets lorsqu'ils sont déployés dans la veine.

On évite ainsi les turbulences lors de la descente des volets de blocage, dans la veine de circulation du flux d'air secondaire.

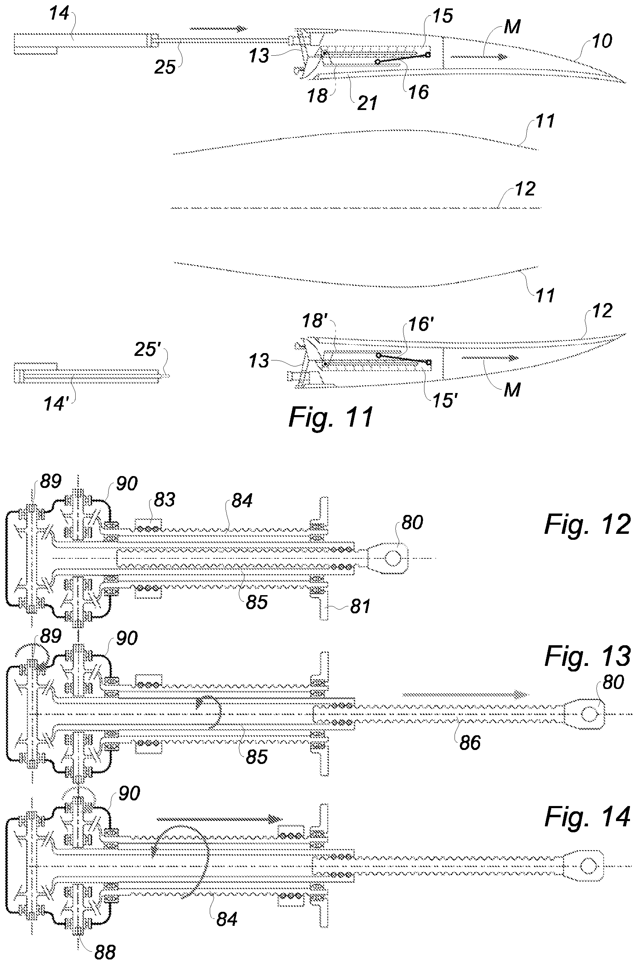

A la Figure 11, on a représenté une vue en coupe du dispositif d'inversion monté dans la section aval d'une nacelle lors d'une opération de maintenance.

Lorsque l'aéronef est au sol, il est connu d'accéder à la structure interne fixe IFS 11 en ouvrant le capot mobile 10, 21 dans la direction M. A cette fin, dans l'invention, des verrous (non représentés) sont disposés entre la bride avant (non représentée) du capot mobile 10 et le cadre avant 13 de la nacelle. Dans ce mode de réalisation, le cadre avant est rendu mobile relativement à la section amont de la nacelle. Lors des opérations de maintenance, ces verrous de la bride avant du capot mobile 10 au cadre avant 13 sont activés. Il en résulte que les vérins de mobilisation du capot mobile, comme les vérins disposés autour de la position « 12 H » et le vérin 14' disposé à la position « 6H », permettent alors de mobiliser le capot mobile 10 associé à son cadre avant 13 pour mener ensuite les opérations de maintenance dans le capot mobile et/ou sur la structure interne fixe 11. Dans ces opérations, les ensembles de grilles de déviation comme 15 et 15' ainsi que les volets de blocage escamotés sous les grilles comme les volets 18 et 18', sont alors insérés dans le volume annulaire compris à l'entrée amont du capot mobile entre sa peau extérieure 10 et sa peau intérieure 21.

L'ensemble mobile composé du capot mobile 10, de son cadre avant 13 et des ensembles de grilles de déviation 14 et 14' et des volets de blocage 18 et 18', est ensuite refermé par une manipulation inverse des vérins 14 et 14' et il est désolidarisé en rouvrant les verrous entre la bride avant du capot mobile 10 et le cadre avant 13 de la nacelle, pour reprendre une configuration de vol.

Aux Figures 12 à 13, on a représenté un modèle de vérin intégrant les deux vérins précités réservés ou bien au déplacement du capot mobile ou bien au déplacement des volets de blocage.

A la Figure 12, le vérin combiné est en position fermée, une tige intérieure 80 étant rentrée et une noix filetée 83 étant elle-même disposée le plus à gauche au dessin. L'extrémité libre de la tige intérieure 80 est solidaire du capot mobile tandis que la noix 83 porte un cadre qui est destinée à s'attacher à un (aux) volet(s) de blocage. Le boîtier du vérin 90 comporte un premier arbre d'entrée 89 qui, par un mécanisme convenable (non représenté) transforme le mouvement de rotation d'arbre 89 en un mouvement de rotation d'un tube taraudé 85. Le filetage de la tige intérieure 80 étant engagé avec le tube taraudé 85, la tige intérieure 80 peut se déplacer vers la droite ou vers la gauche selon le sens de rotation appliqué à l'arbre d'entrée et selon la position de la tige intérieure 80 dans le tube taraudé 85.

A la Figure 13, la tige intérieure 80 a été représentée entièrement sortie du corps du vérin, ce qui correspond à l'ouverture complète du capot mobile auquel le vérin est attaché.

A la Figure 14, la tige intérieure 80 étant sortie, on a représenté la mobilisation vers la droite de la noix 83 (Figure 12) obtenue par la mise en rotation des demi-arbres comme le demi-arbre 88 qui sont connectés par un mécanisme convenable (non représenté) qui transforme le mouvement de rotation des demi arbres comme 88 en un mouvement de rotation d'une tige filetée extérieure au vérin, qui sert de vis sans fin à la noix 83 qui se translate alors vers la droite pour entraîner la descente du (des) volet(s) de blocage associé(s).

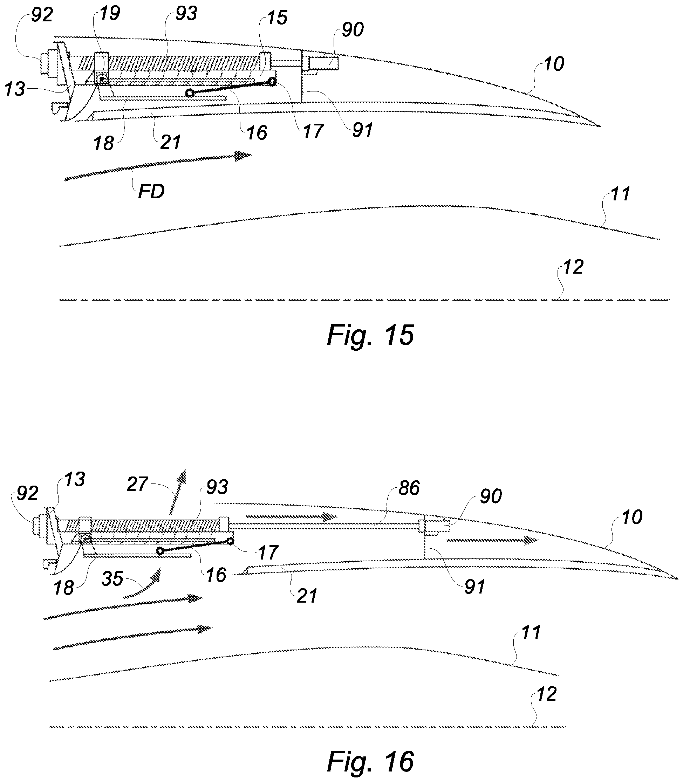

A la Figure 15, on a représenté l'application du vérin combiné des Figures 12 à 14 à un dispositif d'inversion selon l'invention. Le mode de réalisation du dispositif d'inversion de poussée suit la séquence décrite à l'aide de la Figure 1 et utilise les mêmes moyens pour exécuter le passage d'un fonctionnement jet direct à un fonctionnement jet inversé réalisé en deux temps.

Le capot mobile de ce mode de réalisation est modifié par rapport au capot mobile du mode de réalisation des Figures 1 à 11. Le capot mobile du mode de réalisation de la Figure 15 comporte une bride 91 qui sépare le compartiment destiné à accueillir les ensembles de grilles de déviation et les volets de blocage lorsqu'il est replié, de la partie aval du capot mobile. La bride 91 joint la peau extérieure 10 à la peau intérieure 21, contribuant à leur rigidité. Elle porte aussi un appui 90 sur lequel est solidarisé l'extrémité de la tige intérieure de chaque vérin combiné comme la tige 80 du vérin combiné des Figures 12 à 14.

Bien entendu, la bride 91 est de forme annulaire autour de l'axe central 12 de la nacelle et plusieurs vérins combinés sont disposés à des positions angulaires déterminées avec chacun son propre appui sur la bride 91. On a ainsi représenté le vérin combiné 92, qui a été solidarisé du cadre avant 13 et qui est disposé sur la Figure 15 au-dessus de l'ensemble de grilles de déviation 15 avec le volet de blocage 18 articulé par son bord amont sur la noix (comme la noix 83 ; Figure 12) sur laquelle est articulé le bord amont du volet de blocage 18 déjà décrit aux Figures 2 à 10.

On a représenté sur la Figure 15 le tube extérieur fileté 93 (identique au tube 84 ; Figure 12) du vérin combiné 92 le long duquel peut se déplacer la noix qui porte l'articulation 19 du volet 18. Les autres éléments ont déjà été décrits.

A la Figure 16, on a représenté le capot mobile 10, 21 dans sa position ouverte à droite, la tige intérieure 86 du vérin combiné 92 ayant été entièrement sortie du corps du vérin 92. Il s'agit du deuxième état (voir Figure 1) du dispositif d'inversion de poussée juste avant la manoeuvre des volets de blocage 18. Les autres éléments de la Figure ont déjà été décrits précédemment et ne seront pas plus décrits.

Ultérieurement, la noix portant l'articulation 19 du bord amont du volet suit le même chemin de translation le long du tube 93 du vérin combiné 92 solidaire du cadre avant. Le volet de blocage 18 prend alors le mouvement de descente déjà décrit à l'aide des Figures 3 et suivantes. Les mêmes dispositions que celles indiquées aux Figures 4 et 8, 9 et 9', 10 et 10' sont prises aussi pour l'amélioration de l'aéramatch.

En plus des avantages déjà décrits, la présente invention présente les avantages suivants.

Du fait de la disposition des vérins, des ensembles de grilles et des volets à l'intérieur du volume du capot mobile, on laisse la veine de circulation du flux d'air secondaire issu de la soufflante sans obstacle, ce qui entraîne une aérodynamique en vol optimale, ainsi qu'un comportement acoustique optimal au décollage et en vol.

Lorsque les vérins de mobilisation des volets sont séparés, on constate une réduction de la puissance motrice nécessaire et sa répartition tout autour de l'axe central de la nacelle.

La dissociation du capot mobile et du cadre avant simplifie la maintenance du capot mobile.

Comme il va de soi, l'invention ne se limite pas aux seules formes de réalisation de ce dispositif d'inversion de poussée, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Dispositif d'inversion de poussée pour nacelle pour moteur d'aéronef comprenant :
- un capot (10, 21) mobile alternativement entre une position déployée selon laquelle il ouvre un passage dans la nacelle, ladite position étant adaptée pour permettre un fonctionnement jet inversé de ladite nacelle, et une position d'escamotage selon laquelle il ferme ce passage, ladite position étant adaptée pour permettre un fonctionnement jet direct de la nacelle ;
- un ensemble de grilles de déviation (15) d'un flux d'air secondaire s'écoulant dans une veine de circulation du flux d'air secondaire de la nacelle, fixées en amont dudit capot ;
- des volets de blocage (18) du flux d'air secondaire mobiles alternativement entre :
∘ une position repliée dans laquelle lesdits volets sont stockés, au moins pour une position d'escamotage dudit capot à l'intérieur dudit capot et sous ledit ensemble de grilles de déviation (15), et
∘ une position déployée dans laquelle ils bloquent au moins partiellement le flux d'air secondaire s'écoulant dans ladite veine,
- des moyens pour exécuter le passage d'un fonctionnement jet direct à un fonctionnement jet inversé, adaptés pour réaliser le passage d'un fonctionnement jet direct à un fonctionnement jet inversé en deux temps :
∘ translation du capot mobile vers l'aval de la nacelle jusqu'à une position déployée dudit capot, lesdits volets étant en position repliée,
∘ ouverture des volets de blocage depuis ladite position repliée vers ladite position déployée,
ledit dispositif d'inversion de poussée étant **caractérisé en ce que** les volets de blocage (18) comportent un bord amont monté sur une articulation (19) solidaire dudit ensemble de grilles de déviation (15) et un bord aval monté sur un levier (16) articulé sur ledit ensemble de grilles de déviation (15).

2. Dispositif d'inversion de poussée selon la revendication 1, **caractérisé en ce que** les moyens pour exécuter le passage d'un fonctionnement jet direct à un fonctionnement jet inversé réalisé en deux temps comportent des vérins (14) solidaires d'une section amont de la nacelle à travers un cadre avant (13) de la nacelle pour mobiliser le capot mobile (10, 21), un appui solidaire (20) du capot mobile (10, 21) étant fixé à l'extrémité de la tige mobile (25) de chacun des dits vérins (14) de mobilisation de capot mobile, les ensembles de grilles de déviation (15) étant solidaires du cadre avant (13).

3. Dispositif d'inversion de poussée selon la revendication précédente, **caractérisé en ce qu'**il comporte deux vérins de mobilisation de capot disposés de part et d'autre de la position « 12 H » et un vérin de mobilisation de capot disposé sensiblement à la position « 6 H ».

4. Dispositif d'inversion de poussée selon l'une quelconque des revendications précédentes, **caractérisé en ce que** les moyens pour exécuter le passage d'un fonctionnement jet direct à un fonctionnement jet inversé réalisé en deux temps comportent des vérins (42) solidaires des ensembles de grilles de déviation qui présentent chacun une vis sans fin (40) sur laquelle une articulation (41) solidaire du bord amont d'un volet de blocage (18) est astreint à se déplacer pour manipuler le volet de blocage (18) entre une position fermée sous l'ensemble de grilles de déviation et une position ouverte en travers de la veine directe d'air de sorte que le flux d'air de soufflante soit dirigé à travers (27) les ensembles de grilles de déviation (15).

5. Dispositif d'inversion de poussée selon l'une quelconque des revendications précédentes, **caractérisé en ce qu'**il comporte au moins un verrou entre le cadre avant et le capot mobile, adapté pour verrouiller ledit cadre avant et ledit capot mobile lors des opérations de maintenance, de sorte que l'ensemble composé du cadre avant, des ensembles de grilles de déviation, des volets de blocage et leurs vérins et du capot mobile peuvent être manoeuvrés au moyen d'au moins l'un des vérins de manipulation de capot mobile en maintenance.

6. Dispositif d'inversion de poussée selon la revendication 1, **caractérisé en ce que** les moyens pour exécuter le passage d'un fonctionnement jet direct à un fonctionnement jet inversé réalisé en deux temps comportent des vérins de manipulation de capot mobile et des vérins de mobilisation des volets de blocage intégrés en une pluralité de vérins combinés comportant une tige intérieure (80) pour entraîner le capot mobile et un tube fileté extérieur (84) pour entraîner une articulation (83) solidaire d'un cadre amont d'un volet de blocage (18).

7. Dispositif d'inversion de poussée selon la revendication précédente, **caractérisé en ce que** le vérin combiné comporte un premier arbre moteur couplé à la tige intérieure par un mécanisme de conversion de mouvement, et au moins un second arbre moteur couplé au tube extérieur fileté par un mécanisme de conversion de mouvement.

8. Dispositif d'inversion de poussée selon la revendication 6 ou 7, **caractérisé en ce que** le vérin combiné (92) est solidaire du cadre avant (13) associé au capot mobile (10, 21).

9. Dispositif d'inversion de poussée selon la revendication 7, **caractérisé en ce que** le capot mobile comporte une bride (91) disposée au-delà du volume occupé par les vérins (92), les ensembles de grilles de déviation (15), les volets de blocage (18) et leurs leviers (16) lorsque le capot mobile (10, 21) est refermé et **en ce que** la bride (91) porte des appuis (90) sur lesquels sont solidarisés les extrémités des tiges mobiles (86) de vérin combiné (92) pour mobiliser le capot mobile (10, 21).

10. Dispositif selon l'une quelconque des revendications précédentes, les volets de blocage présentant une forme trapézoïdale, **caractérisé en ce que** la réduction de l'aéramatch est assurée par au moins l'un des moyens suivants :
- les intervalles entre bords latéraux (64, 65) des volets sont occupés par des inter-volets triangulaires (62) mobiles (63) qui sont progressivement retirés de, respectivement réintroduits dans, l'intervalle entre deux volets au fur et à mesure de la descente du volet dans la veine d'air direct, respectivement le retour du volet sous l'ensemble de grilles de déviation ;
- les intervalles entre bords latéraux des volets sont occupés par des inter-volets triangulaires (62) solidaires des ensembles de grilles de déviation, les bords latéraux des volets présentant des becquets (66, 67) en épaisseur pour dévier les jets interceptés ; et/ou
- les bords latéraux des volets adjacents présentent des profils d'épaisseur déterminés (73, 74) pour assurer le chevauchement des bords latéraux des volets lorsqu'ils sont déployés dans la veine d'air direct.

11. Nacelle de moteur d'aéronef, **caractérisée en ce qu'**elle comporte un dispositif d'inversion de poussée selon l'une quelconque des revendications précédentes.

## Patentansprüche

1. Schubumkehrvorrichtung für eine Gondel für ein Flugzeugtriebwerk, umfassend:
- eine Haube (10, 21), die wechselweise zwischen einer ausgefahrenen Stellung, der gemäß sie einen Durchlass in der Gondel öffnet, wobei die Stellung dafür ausgelegt ist, einen Umkehrstrahlbetrieb der Gondel zu ermöglichen, und einer Versenkstellung beweglich ist, der gemäß sie diesen Durchlass schließt, wobei die Stellung dafür ausgelegt ist, einen Direktstrahlbetrieb der Gondel zu ermöglichen;
- einen Satz von stromaufwärts der Haube befestigten Umlenkgittern (15) eines Sekundärluftstroms, der in einem Zirkulationsgang des Sekundärluftstroms der Gondel fließt;
- Blockierklappen (18) des Sekundärluftstroms, die wechselweise beweglich sind zwischen:
-- einer eingezogenen Stellung, in der die Klappen, zumindest bei einer Versenkstellung der Haube, im Inneren der Haube und unter dem Satz von Umlenkgittern (15) verstaut sind, und
-- einer ausgefahrenen Stellung, in der sie den Sekundärluftstrom, der in dem Gang fließt, zumindest teilweise blockieren,
- Mittel zum Durchführen des Wechsels von einem Direktstrahlbetrieb zu einem Umkehrstrahlbetrieb, die dafür ausgelegt sind, den Wechsel von einem Direktstrahlbetrieb zu einem Umkehrstrahlbetrieb in zwei Etappen auszuführen:
-- Translation der beweglichen Haube zur Stromabwärtsseite der Gondel hin bis zu einer ausgefahrenen Stellung der Haube, wobei sich die Klappen in eingezogener Stellung befinden,
-- Öffnen der Blockierklappen aus der eingezogenen Stellung hin zur ausgefahrenen Stellung,
wobei die Schubumkehrvorrichtung **dadurch gekennzeichnet ist, dass** die Blockierklappen (18) eine stromaufwärtige Kante umfassen, die an einem Gelenk (19) montiert ist, das mit dem Satz von Umlenkgittern (15) fest verbunden ist, und eine stromabwärtige Kante, die an einem Gelenkhebel (16) an dem Satz von Umlenkgittern (15) montiert ist.

2. Schubumkehrvorrichtung nach Anspruch 1, **dadurch gekennzeichnet, dass** die Mittel zum Durchführen des in zwei Etappen ausgeführten Wechsels von einem Direktstrahlbetrieb zu einem Umkehrstrahlbetrieb fest mit einem stromaufwärtigen Abschnitt der Gondel durch einen vorderen Rahmen (13) der Gondel hindurch verbundene Zylinder (14) zum Bewegen der beweglichen Haube (10, 21) umfassen, wobei eine fest mit der beweglichen Haube (10, 21) verbundene Auflage (20) am Ende der beweglichen Stange (25) eines jeden der Zylinder (14) zum Bewegen der beweglichen Haube befestigt ist, wobei die Sätze von Umlenkgittern (15) fest mit dem vorderen Rahmen (13) verbunden sind.

3. Schubumkehrvorrichtung nach dem vorhergehenden Anspruch, **dadurch gekennzeichnet, dass** sie zwei Zylinder zum Bewegen der Haube umfasst, die auf beiden Seiten der "12-Uhr"-Stellung angeordnet sind, und einen Zylinder zum Bewegen der Haube, der im Wesentlichen an der "6-Uhr"-Stellung angeordnet ist.

4. Schubumkehrvorrichtung nach einem der vorhergehenden Ansprüche, **dadurch gekennzeichnet, dass** die Mittel zum Durchführen des in zwei Etappen ausgeführten Wechsels von einem Direktstrahlbetrieb zu einem Umkehrstrahlbetrieb fest mit den Sätzen von Umlenkgittern verbundene Zylinder (42) umfassen, die jeder eine Schnecke (40) aufweisen, an der ein fest mit der stromaufwärtigen Kante einer Blockierklappe (18) verbundenes Gelenk (41) dazu gezwungen wird, sich zu verlagern, um die Blockierklappe (18) zwischen einer geschlossenen Stellung unter dem Satz von Umlenkgittern und einer offenen Stellung quer zum direkten Luftgang zu betätigen, sodass der Gebläseluftstrom durch (27) die Sätze von Umlenkgittern (15) hindurch gelenkt wird.

5. Schubumkehrvorrichtung nach einem der vorhergehenden Ansprüche, **dadurch gekennzeichnet, dass** sie mindestens eine Verriegelung zwischen dem vorderen Rahmen und der beweglichen Haube umfasst, die dafür ausgelegt ist, den vorderen Rahmen und die bewegliche Haube bei den Wartungsvorgängen zu verriegeln, sodass der aus dem vorderen Rahmen, den Umlenkgitter-Sätzen, den Blockierklappen und deren Zylindern und der beweglichen Haube bestehende Satz bei der Wartung mittels mindestens einem der Zylinder zum Betätigen der beweglichen Haube bedient werden kann.

6. Schubumkehrvorrichtung nach Anspruch 1, **dadurch gekennzeichnet, dass** die Mittel zum Durchführen des in zwei Etappen ausgeführten Wechsels von einem Direktstrahlbetrieb zu einem Umkehrstrahlbetrieb Zylinder zum Betätigen der beweglichen Haube und Zylinder zum Bewegen der Blockierklappen umfassen, die in einer Vielzahl von kombinierten Zylindern integriert sind, die eine innere Stange (80) zum Antreiben der beweglichen Haube und ein Außengewinderohr (84) zum Antreiben eines fest mit einem stromaufwärtigen Rahmen einer Blockierklappe (18) verbundenen Gelenks (83) umfassen.

7. Schubumkehrvorrichtung nach dem vorhergehenden Anspruch, **dadurch gekennzeichnet, dass** der kombinierte Zylinder eine erste Triebwelle umfasst, die über einen Bewegungsumwandlungsmechanismus mit der inneren Stange gekoppelt ist, und mindestens eine zweite Triebwelle, die über einen Bewegungsumwandlungsmechanismus mit dem Außengewinderohr gekoppelt ist.

8. Schubumkehrvorrichtung nach Anspruch 6 oder 7, **dadurch gekennzeichnet, dass** der kombinierte Zylinder (92) fest mit dem vorderen Rahmen (13) verbunden ist, der mit der beweglichen Haube (10, 21) verknüpft ist.

9. Schubumkehrvorrichtung nach Anspruch 7, **dadurch gekennzeichnet, dass** die bewegliche Haube einen Flansch (91) umfasst, der jenseits des Volumens angeordnet ist, das von den Zylindern (92), den Umlenkgitter-Sätzen (15), den Blockierklappen (18) und deren Hebeln (16) besetzt wird, wenn die bewegliche Haube (10, 21) wieder geschlossen ist, und dadurch, dass der Flansch (91) Auflagen (90) trägt, an denen die Enden der beweglichen Stangen (86) des kombinierten Zylinders (92) zum Bewegen der beweglichen Haube (10, 21) fest verbunden sind.

10. Vorrichtung nach einem der vorhergehenden Ansprüche, wobei die Blockierklappen eine Trapezform aufweisen, **dadurch gekennzeichnet, dass** die Reduzierung des Aéramatch über mindestens eines der folgenden Mittel sichergestellt wird:
- die Zwischenräume zwischen Seitenkanten (64, 65) der Klappen sind durch bewegliche (63) dreieckige Zwischenklappen (62) besetzt, die im Laufe der Absenkung der Klappe in den direkten Luftgang, beziehungsweise der Rückkehr der Klappe unter den Satz von Umlenkgittern nach und nach aus dem Zwischenraum zwischen zwei Klappen herausgezogen, beziehungsweise wieder in diesen eingeführt werden;
- die Zwischenräume zwischen Seitenkanten der Klappen sind durch dreieckige Zwischenklappen (62) besetzt, die fest mit den Umlenkgitter-Sätzen verbunden sind, wobei die Seitenkanten der Klappen Dickenspoiler (66, 67) zum Umlenken der abgefangenen Strahle aufweisen; und/oder
- die Seitenkanten der benachbarten Klappen weisen bestimmte Dickenprofile (73, 74) auf zum Sicherstellen der Überlappung der Seitenkanten der Klappen, wenn sie in den direkten Luftgang ausgefahren sind.

11. Flugzeugtriebwerksgondel, **dadurch gekennzeichnet, dass** sie eine Schubumkehrvorrichtung nach einem der vorhergehenden Ansprüche umfasst.

## Claims

1. A thrust reverser device for an aircraft motor nacelle comprising:
- a cowl (10, 21) movable in reciprocation between a deployed position in which it opens a passage in the nacelle, said position being adapted to allow a reverse jet operation of said nacelle, and a retracted position in which it closes this passage, said position being adapted to allow a direct jet operation of the nacelle;
- a cascade vane assembly (15) of a secondary air flow flowing in a circulation flow path of the secondary air flow of the nacelle, fastened upstream of said cowl;
- blocking flaps (18) of the secondary air flow alternately movable between:
∘ a folded position in which said flaps are stowed, at least for a retracted position of said cowl inside said cowl and under said cascade vane assembly (15), and
∘ a deployed position in which they block at least partially the secondary air flow flowing in said flow path,
- means for performing the switch from a direct jet operation to a reverse jet operation, adapted to carry out the switch from a direct jet operation to a reverse jet operation in two phases:
∘ translation of the movable cowl downstream of the nacelle to a deployed position of said cowl, said flaps being in folded position,
∘ opening of the blocking flaps from said folded position to said deployed position,
said thrust reverser device being **characterized in that** the blocking flaps (18) include an upstream edge mounted on a hinge (19) secured to said cascade vane assembly (15) and a downstream edge mounted on a lever (16) hinged on said cascade vane assembly (15).

2. The thrust reverser device according to claim 1, **characterized in that** the means for performing the switch from a direct jet operation to a reverse jet operation carried out in two phases include cylinders (14) secured to an upstream section of the nacelle through a front frame (13) of the nacelle to mobilize the movable cowl (10, 21), a bearing (20) secured to the movable cowl (10, 21) being fastened to the end of the movable rod (25) of each of said cylinders (14) for mobilizing the movable cowl, the cascade vane assemblies (15) being secured to the front frame (13).

3. The thrust reverser device according to the preceding claim, **characterized in that** it includes two cylinders for mobilizing the movable cowl arranged on either side of the « 12 o'clock » position and one cylinder for mobilizing the movable cowl arranged substantially at the « 6 o'clock » position.

4. The thrust reverser device according to any one of the preceding claims, **characterized in that** the means for performing the switch from a direct jet operation to a reverse jet operation carried out in two phases include cylinders (42) secured to the assemblies of cascade vanes, which have each a worm (40) on which an hinge (41) secured to the upstream edge of a blocking flap (18) is compelled to be displaced in order to handle the blocking flap (18) between a closed position under the cascade vane assembly and an open position crosswise to the direct air flow path such that the fan air flow is directed crosswise (27) to the cascade vane assembly (15).

5. The thrust reverser device according to any one of the preceding claims, **characterized in that** it includes at least one lock between the front frame and the movable cowl, adapted to lock said front frame and said movable cowl during the maintenance operations, such that the assembly composed of the front frame, the assemblies of cascade vanes, the blocking flaps and the cylinders thereof and of the movable cowl may be maneuvered by means of at least one of the handling cylinders of a mobile cowl in maintenance.

6. The thrust reverser device according to claim 1, **characterized in that** the means for performing the switch from a direct jet operation to a reverse jet operation carried out in two phases include handling cylinders of movable cowl and mobilization cylinders of the blocking flaps integrated in a plurality of combined cylinders including an inner rod (80) for driving the movable cowl and an outer threaded tube (84) for driving a hinge (83) secured to an upstream frame of a blocking flap (18).

7. The thrust reverser device according to the preceding claim, **characterized in that** the combined cylinder includes a first drive shaft coupled to the inner rod by a movement conversion mechanism, and at least one second drive shaft coupled to the outer threaded tube by a movement conversion mechanism.

8. The thrust reverser device according to claim 6 or 7, **characterized in that** the combined cylinder (92) is secured to the front frame (13) associated to the movable cowl (10, 21).

9. The thrust reverser device according to claim 7, **characterized in that** the movable cowl includes a flange (91) arranged beyond the volume occupied by the cylinders (92), the assemblies of cascade vanes (15), the blocking flaps (18) and the levers (16) thereof when the movable cowl (10, 21) is closed and **in that** the flange (91) carries bearings (90) on which the ends of the movable rods (86) of the combined cylinder (92) are secured in order to mobilize the movable cowl (10, 21).

10. The thrust reverser device according to any one of the preceding claims, wherein the blocking flaps have a trapezoidal shape, **characterized in that** the reduction of the aeramatch is ensured by at least one of the following means:
- the spaces between the lateral edges (64, 65) of the flaps are occupied by movable (63) triangular inter-flaps (63) which are progressively removed from, respectively reintroduced into, the space between two flaps as and when the flap is comes down into the direct air flow path, respectively as and when the flap is returned under the cascade vane assembly;
- the spaces between the lateral edges of the flaps are occupied by triangular inter-flaps (62) secured to the assemblies of cascade vanes, the lateral edges of the flaps having spoilers (66, 67) in thickness to deflect the intercepted jets; and/or
- the lateral edges of the adjacent flaps have determined thickness profiles (73, 74) in order to ensure overlapping of the lateral edges of the flaps when they are deployed in the direct air flow path.

11. A nacelle for an aircraft engine, **characterized in that** it includes a thrust reverser device according to any one of the preceding claims.
